# EUROPEAN PATENT APPLICATION

(11) **EP 4 116 222 A1**
(43) Date of publication of application: **11.01.2023**
(21) Application number: 22182123.4
(22) Date of filing: 30.06.2022
(51) Int. Cl.: B65D 85/04, B65D 19/44, B65D 85/26, B23K 9/133, B65H 49/08

(54) **WIRE CONTAINER**

(30) Priority: 09.07.2021 US 202117372171
(71) Applicant: SIDERGAS SpA, 37010 S. Ambrogio di Valpolicella (IT)
(72) Inventor: GELMETTI, Carlo, 37010 S. Ambrogio di Valpolicella (IT)
(74) Representative: Prinz & Partner mbB

(57) **Abstract**

A wire container (1) has a bottom plate (10), a top plate (12), and a plurality of vertically extending posts (14). The posts are releasably connected to both the bottom plate and the top plate. The bottom plate, the top plate and the posts are formed from metal.

## Description

The invention relates to a wire container which is being used to store and transport a length of wire, in particular welding wire, and to make the wire available at a site where it is being consumed.

### BACKGROUND OF THE INVENTION

Wire consumables are employed in many industrial applications: from surface treatments like metallization to joining of metal parts through welding processes.

In many industrial applications, which are nowadays seeing important investments in automatic and robotic systems, a maximized productivity is essential and bulk containers with large quantities of consumable are preferred over smaller spools because they allow to reduce the interruptions and minimize the spool replacement downtime.

A parameter commonly accepted in the welding industry to measure the changeover downtime teaches that it normally takes an average of 15 minutes to replace an empty 15 kg spool with a full new one, and the spool changeover downtime can be therefore quantified in one minute lost to changeover for one kg of wire. Based on this calculation, it appears obvious that a large pack or drum containing 1200 Kgs of product is equivalent to as much as 20 hours of changeover downtime saving. These 20 hours can be better used to actively produce instead of having to continuously interrupt the production because of spool changes: this advantage translates into a significant reduction of production costs and improves the efficiency of the manufacturing processes. It must be added that every undesired production stop can lead to additional complications and disadvantages in terms of consistency of quality, because in certain welding processes like the production of fuel tanks or long welds on trailers or railway cars, it is generally not acceptable to stop in the middle of a weld bead, which must instead preferably be uninterrupted from start-to-end of the welding process; in certain metallization or welding applications, an intermediate unwanted interruption can cause a total rejection and scrapping of the processed part altogether.

Bulk packs containing a large quantity of wire, which allow to produce continuously without interruptions, represent an essential requirement of highly productive robotic and automatic setups. In order to prevent unwanted entanglement of wire loops during transport and handling of the container, the container has to be strong and sturdy enough to keep the coil of wire undeformed and its wire strands exactly where a winding machine has placed them when filling the container.

EP 3 100 818 A1 shows a container for welding wire which comprises a welded wire cage for defining a wire receiving space. The welding wire cage has a high rigidity and allows storing a significant amount of wire within the container. Once all the wire has been consumed, the customer has the problem of discarding the empty container.

The object of the invention is to provide a container which is designed to carry large quantities of wire and engineered to withstand abuse in transport and handling without deformation and whose components, after it has been emptied of its content, can be easily separated and recycled.

### BRIEF DESCRIPTION OF THE INVENTION

The present invention provides a large container for welding wire which comprises an outer cardboard box, an insulating pallet possibly made of wood which has the task of facilitating transportation or handling and, at the same time, maintain the wire mass insulated from the ground during the welding arc and an inner steel frame or cage which constitutes the skeleton supporting the whole bulk pack and the wire coil. After the container has been emptied of its content, the components can easily be disassembled and separated for easier diversified recycling and the metal frame can even be sold at scrap metal value since almost every welding shop is organized to gather scrap metal which can be collected and recycled all over the world.

In order to guarantee a reliable and consistent positioning of the wire, the frame is made of a bottom metal plate base with holes or stumps to accommodate four or more vertical tubes and a specular upper metal plate which maintains the vertical tubes locks, thus forming the inner cage into which the wire will be deposited.

Both the bottom and the top plates can be plasma or laser cut to achieve precisely defined openings into which the vertical tubes and the corner fixing screws can be inserted.

In a preferred embodiment, the tubes have a square or rectangular shape to prevent the wire pushing against them from deformation.

The invention provides a wire container having a bottom plate, a top plate, and a plurality of vertically extending posts, the posts being releasably connected to both the bottom plate and the top plate, the bottom plate, the top plate and the posts being formed from metal. The container of the invention is based on the concept of mechanically joining metal components to each other so as to achieve a high stability of a cage which defines a receiving space for the wire, while allowing a simple disassembly process after the wire has been consumed so that the components can be separated and recycled.

In one embodiment, the posts have a rectangular cross section so that a wide abutment surface for the wire is provided. This prevents unwanted deformation of the wire when touching the posts.

The posts can be connected to the bottom and top plates via attachment elements which ensure a positive fit with the bottom and top plates so that a high rigidity is achieved.

The attachment elements can have the form of projections which engage into the ends of the posts so that a mere longitudinal engagement is sufficient.

In one embodiment, the projections are formed in one piece with the bottom and top plates, e.g. by stamping and drawing of the material of the plates. This avoids the steps of manufacturing and mounting separate attachment elements.

In an alternative embodiment, the attachment elements are attachment lugs rigidly connected to an outer surface of the posts. The lugs can be attached to the posts in a very simple manner, e.g. by welding.

Preferably, each of the attachment elements has an opening through which an attachment screw extends, the attachment screw connecting the attachment element to the plate. Using attachments screws allows to disassemble the frame formed by the posts and the plates, in a simple manner after emptying the container.

The attachment screw can be used for connecting a spacer block to the bottom plate so that a forklift can easily lift and transport the container. The spacer block is preferably made from an electrically insulating material so that the container, if it contains welding wire to which an electric tension is being applied during the welding arc, is electrically insulated. The spacer blocks can in particular be made from wood or plastic.

In order to evenly support the bottom plate so that no deformations occur even when the container is filled with several hundreds of kilograms of wire, two spacer blocks are provided which extend in parallel to each other along outer edges of the container, and two short intermediate blocks arranged between the outer blocks and each extending from an outer edge of the container towards a center of the container along a fraction of the diameter of the container.

As an alternative to using spacer blocks, a lifting strap can be provided which extends underneath the bottom plate and upwards to a position above the top plate.

The bottom plate and the top plate can comprise a plurality of receiving openings into which an end of the posts engage in order to increase the stability of the frame formed by the posts and the plates. Furthermore, engaging the ends of the posts into the plates prevents any gap at the ends of the posts in which the wire might become trapped.

The posts can have a rectangular cross-section and the receiving openings can have a rectangular shape so as to receive the posts in a non-rotatable manner. This further increases the stability as the posts cannot rotate with respect to the plates.

In an embodiment, a cardboard box is provided which forms an exterior wall of the container for protection of the wire.

The dimensions of the container can be such that the shortest distance of the cardboard box from the center of the container, seen in a cross section, is larger than the shortest distance of the inner side of the posts from the center of the container, seen in a cross section, so that the wire is supported by the posts and does not touch the cardboard.

In order to prevent humidity from entering the container and oxidating any of the metal structure components or the wire itself, a plastic bag is provided within the posts and on top of the bottom plate.

The invention also provides a wire container having a bottom plate, a top plate, and a plurality of vertically extending posts, the posts being releasably connected to both the bottom plate and the top plate, the bottom plate, the top plate and the posts being formed from metal, each post being provided with an attachment element at each end, the attachment element on one end being connected with a screw to the top plate and the attachment element on the other end being connected to the bottom plate with the screw, the screw associated with the bottom plate connecting a wooden block to the bottom plate, the container having four posts arranged equally spaced from each other so as to define a wire receiving space between them, the wire receiving space having a diameter in the range of 600 mm to 800 mm, the distance between the bottom plate and the top plate being in a range of 800 mm to 1,200 mm, each of the posts engaging with one end in a receiving opening provided in the respective plate. Such container allows receiving a significant amount of wire, in particular welding wire, which can be transported and handled without there being the risk of entanglement of the wire loops.

### BRIEF DESCRIPTION OF THE DRAWINGS

Figure 1 shows a wire container according to a first embodiment in a perspective view;
Figure 2 shows the wire container of Figure 1 in a top view, except for the cardboard box;
Figure 3 shows the wire container of Figure 2 in a side;
Figure 4 shows the bottom plate of the wire container of Figure 1 in a top view;
Figure 5 shows the wire container of Figure 1 in a perspective, exploded view;
Figure 6 shows the wire container of Figure 1 in an exploded side view;
Figure 7 shows a wire container according to a second embodiment in a schematic vertical cross-section;
Figure 8 shows the wire container of Figure 7 in a schematic horizontal cross-section;
Figure 9 shows the wire container of Figure 7 in a schematic perspective view;
Figure 10 shows the container of Figure 7 in a side view with a cardboard box and a plastic bag applied;
Figure 11 shows a bottom plate used in the wire container of Figure 7 in a top view;
Figure 12 shows a third embodiment of the present invention without pallet under the pack and lifting straps for
Figure 13 shows a wire container according to a fourth embodiment in a schematic side view during the assembly process;
Figure 14 shows the wire container of Figure 13 in a schematic top view;
Figure 15 shows the top plate of a wire container of a fifth embodiment in a top view;
Figure 16 shows the frame of the wire container of the fifth embodiment in a side view;
Figure 17 shows the bottom plate of the wire container of the fifth embodiment in a top view;
Figure 18 shows the top plate of the wire container of the fifth embodiment in a perspective bottom view;
Figure 19 shows the bottom plate of the wire container of the fifth embodiment in a perspective top view;
Figure 20 shows the top plate of a wire container of a sixth embodiment in a top view;
Figure 21 shows the frame of the wire container of the sixth embodiment in a side view; and
Figure 22 shows the bottom plate of the wire container of the sixth embodiment in a top view.

### DETAILED DESCRIPTION OF THE INVENTION

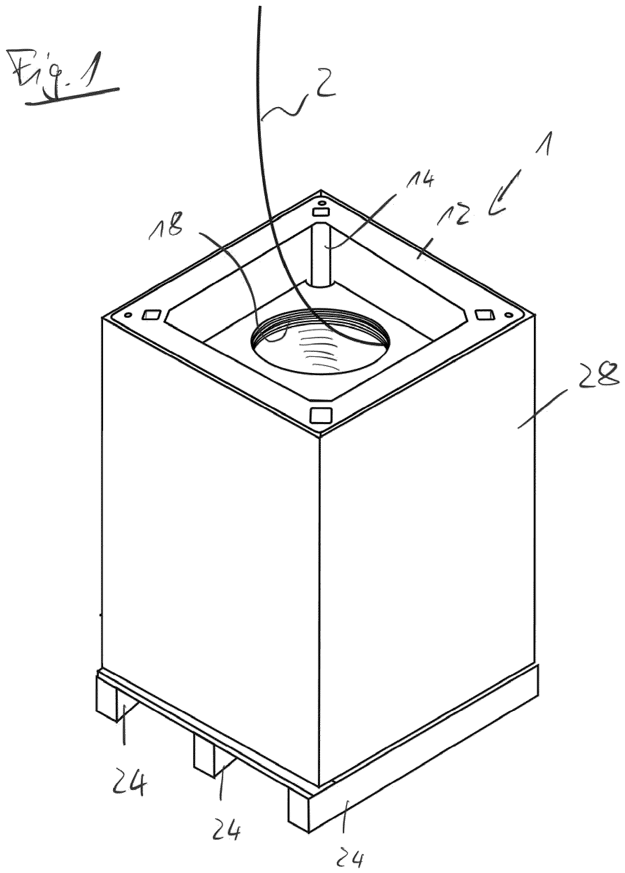

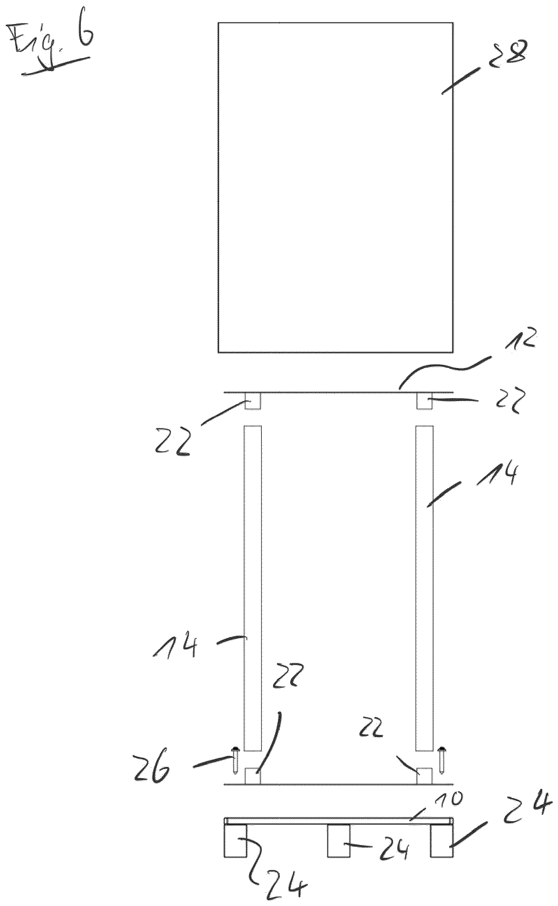

In Figures 1 to 6, a first embodiment of a container 1 adapted to receive an amount of wire 2, in particular welding wire, is shown.

Container 1 comprises a bottom plate 10, a top plate 12 and four posts 14 which extend between bottom plate 10 and top plate 12 and rigidly connect these with each other.

In this particular embodiment, both bottom plate 10 and top plate 14 have the form of a square, and posts 14 are arranged equally spaced from each other so that they also define a square, the dimensions of the square defined by posts 14 being smaller than the dimensions of the square defined by bottom plate 10 or top plate 12.

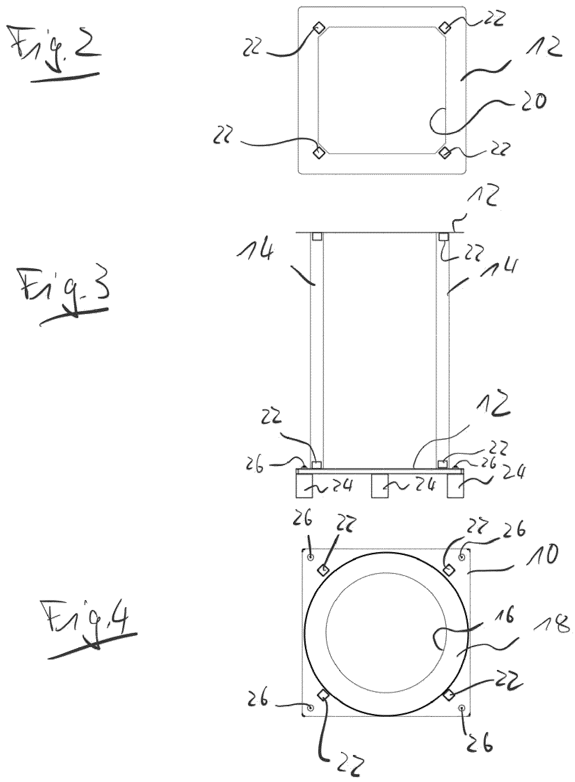

Bottom plate 10 is here provided with an inner opening 16 whose diameter is approximately equal to the inner diameter of a coil 18 formed from loops of wire 2. The footprint of coil 18 is shown in Figure 4.

The coil can have an outer diameter of 700 mm and an inner diameter of 500 mm. Posts 14 can have a cross-section of 25*25 mm, 30*30 mm or 35*35 mm.

Top plate 12 is provided with a central opening 20 which here has a generally square shape. The opening is slightly smaller than the square defined by posts 14. Both the bottom plate 10 and the top plate 12 comprise attachment elements 22 which serve for mechanically connecting posts 14 to plates 10, 12.

In the first embodiment, attachment elements 22 are short portions of a tube with a cross section which corresponds to the shape of the cross section of posts 14, with the outer dimensions of attachment elements 22 corresponding to the inner dimensions of posts 14. Accordingly, posts 14, which are formed from hollow tubes, can be mechanically engaged by being pushed onto attachment elements 22.

Preferably, posts 14 are made from tubes having a square cross section. This provides an abutment surface for coil 18 which is much larger than the abutment surface which would be provided by tubes having a circular cross section.

Bottom plate 10 and top plate 14 are made from sheet metal with a thickness of approximately 2 mm. Tubes 14 are also formed from metal. The same is true for attachment elements 22 which can be welded to bottom plate 10 and top plate 12.

As can be seen in particular in Figures 1 and 3, a plurality of spacer blocks 24 are arranged underneath bottom plate 10. Spacer blocks 24 can be made from wood or from plastic and have a dual function. On the one hand, they allow easy handling of the container by means of a forklift. On the other hand, they insolate container 1 from the ground which is helpful in as much an electrical tension is applied to wire 2 in case the wire is welding wire.

Blocks 24 can be connected to bottom plate 10 with attachment screws 26 which extend through the bottom plate.

Other frame formed from bottom plate 10, top plate 12 and posts 14 defines a receiving space for coil 18. In order to prevent dirt from entering into the container, a cardboard box 28 is provided as an outer cover. In addition, a plastic bag (not shown in Figure 1 to 4) can be placed within the container before the wire is being inserted.

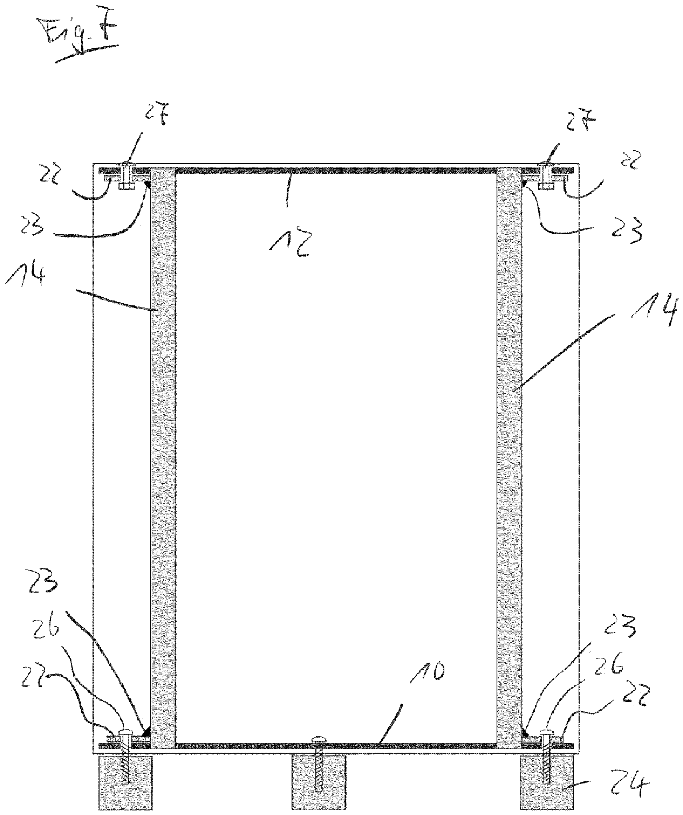

Figures 7 to 11 show a second embodiment of the wire container. For the elements known from the first embodiment, the same reference numerals are used, and reference is made to the above comments.

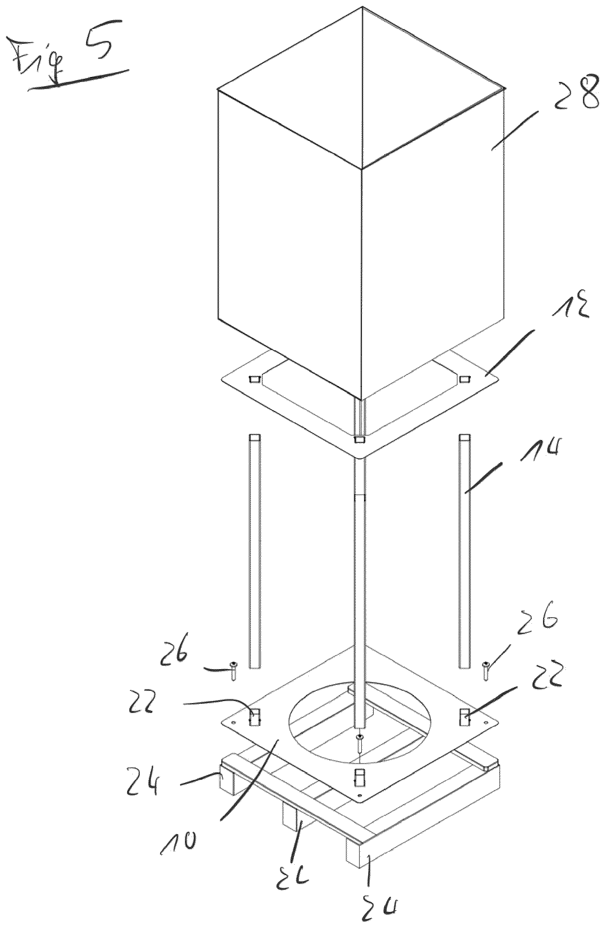

The main difference between the embodiment shown in Figures 5 to 11 and the first embodiment is in the structure of the attachment elements 22. In the second embodiment, the attachment elements 22 are in the form of short lugs which are welded (please see weld seam 22) to posts 14.

Each attachment element 22 is here provided with an opening through which a screw can extend. For attachment elements 22 associated with the lower end of each post, attachment screw 26 can be used which is also used for attaching spacer blocks 24 to bottom plate 10. For the attachment elements 22 associated with the upper end of each post 14, separate attachment screws 27 are used for firmly connecting attachment element 22 to top plate 12.

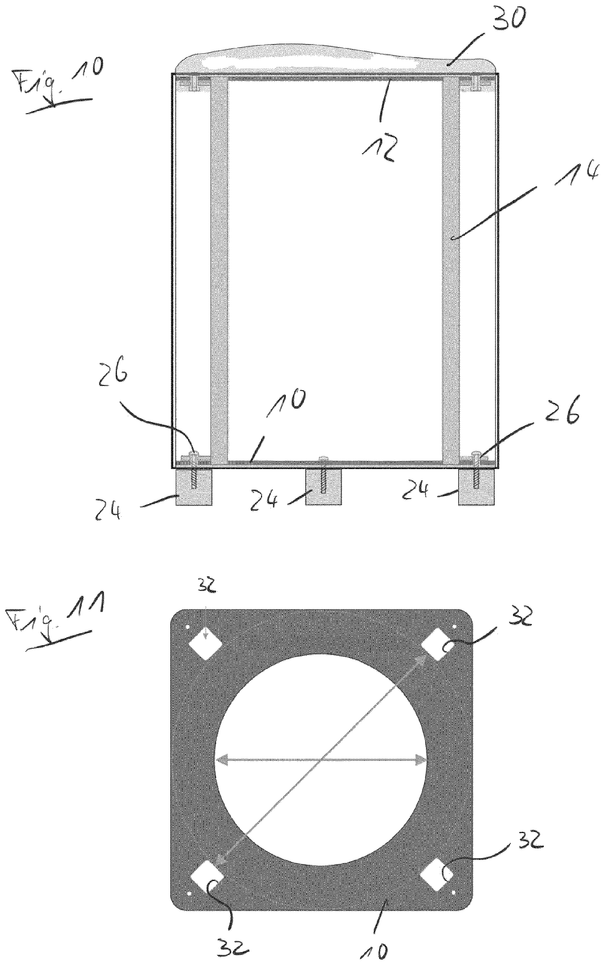

A plastic bag 30 (please see in particular Figure 10) can be used to prevent humidity from entering into the interior of container 1. Plastic bag 30 is arranged outside of the frame formed by plates 10, 12 and posts 14, and within cardboard box 28.

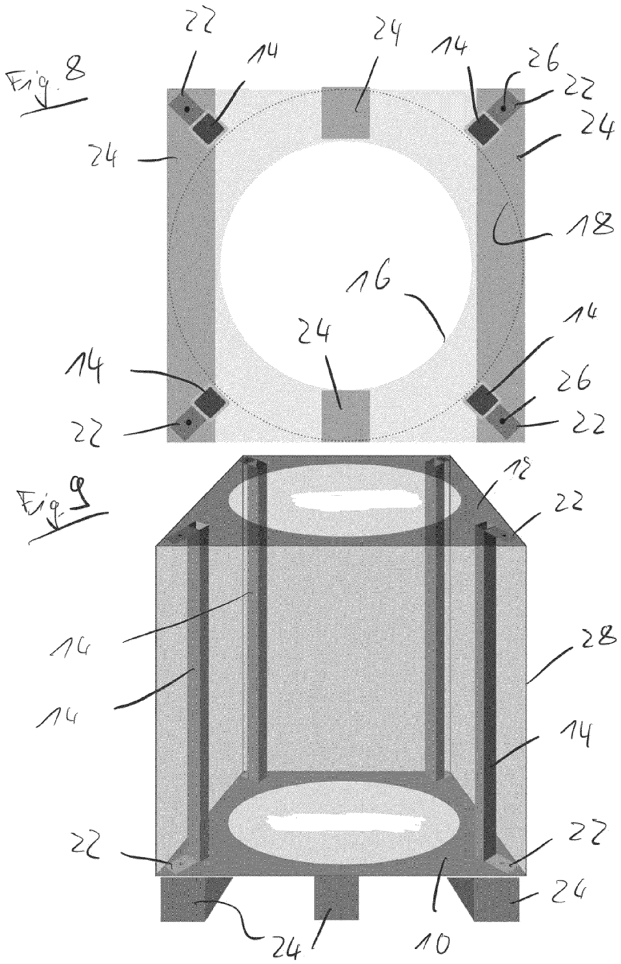

Both bottom plate 10 and top plate 12 comprise receiving openings 32 adapted in size and shape to receive the ends of posts 14 (please see in particular Figures 8 and 11). Attachment elements 22 are connected to posts 14 in a small distance from the end of the posts, this distance being approximately the wall thickness of the bottom plate and the top plate. By placing the ends of posts 14 not flush on plates 10, 12 but by placing them recessed "outside" the space which receives the wire, it is prevented that wire is being pinched between the ends of the posts and the respective plate.

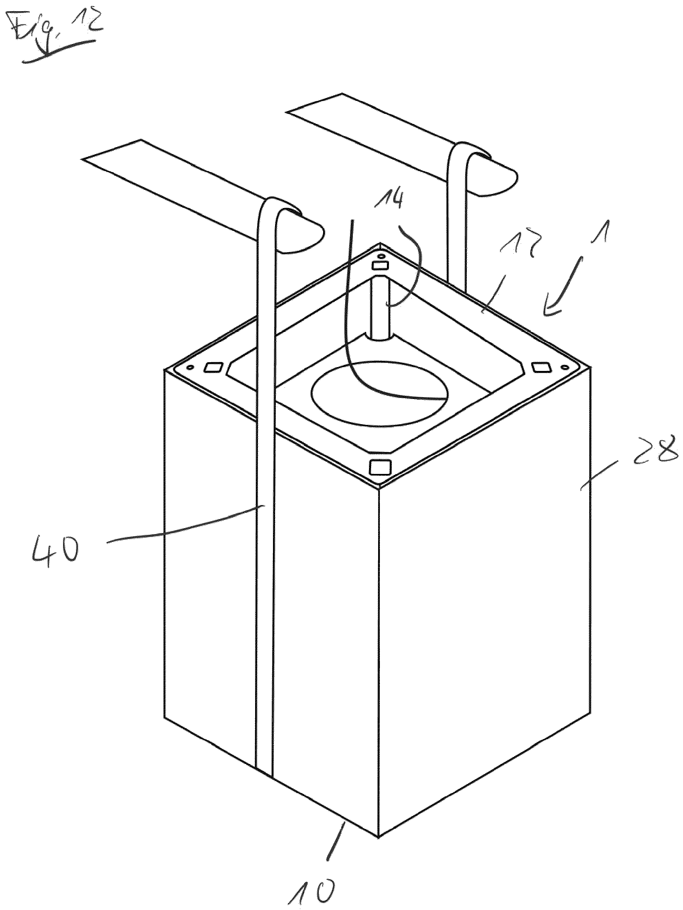

Figure 12 shows a wire container according to a third embodiment, which is similar to the first embodiment but is not provided with spacer blocks. Rather, a lifting strap 40 is provided which extends from above the container along a sidewall, underneath the bottom plate 10, and along an opposite sidewall upwardly.

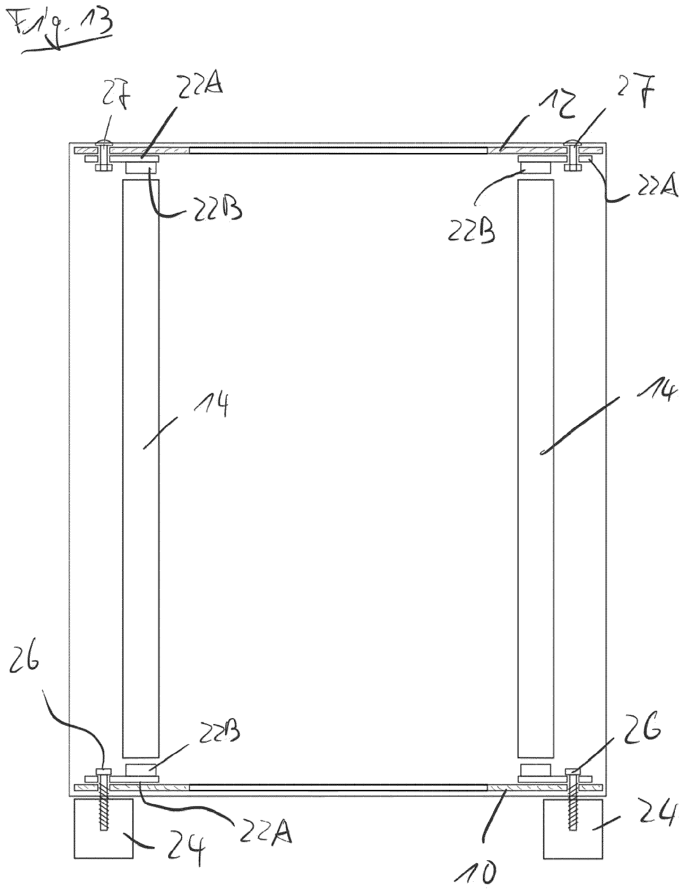

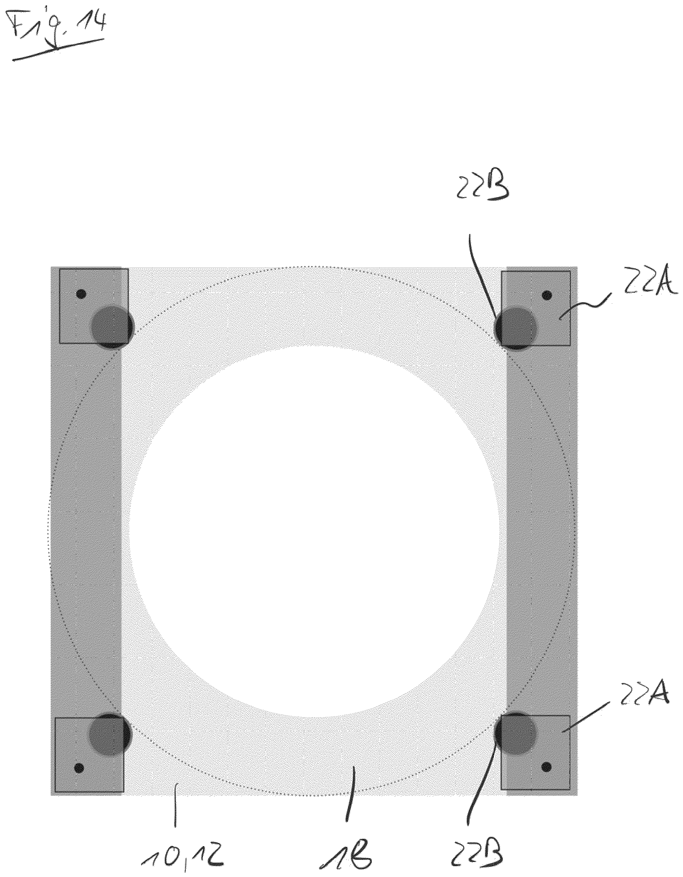

In Figures 13 and 14, a container according to a fourth embodiment is shown. For the elements known from the previous embodiments, the same reference numerals are being used, and reference is made to the above comments.

The difference between the fourth embodiment and the other embodiments is the configuration of attachment elements 22.

In the fourth embodiment, attachment elements 22 consist of an attachment lug 22a, and a projection 22b adapted in shape and size to engage to the interior of posts 14. Attachment lugs 22a are connected to bottom plate 10 and top plate 12 by means of attachment screws 26, 27.

As can be seen in Figure 14, attachment lugs 22 here have a rectangular shape.

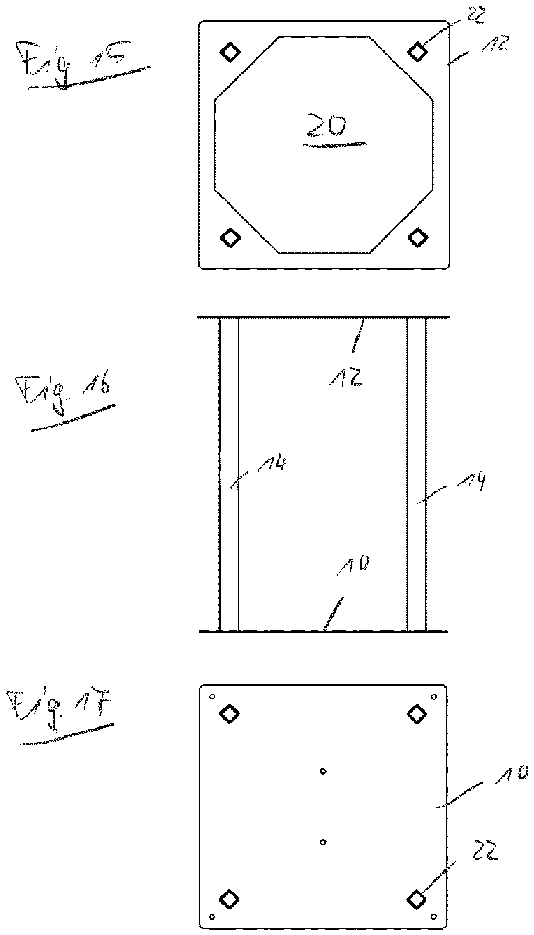

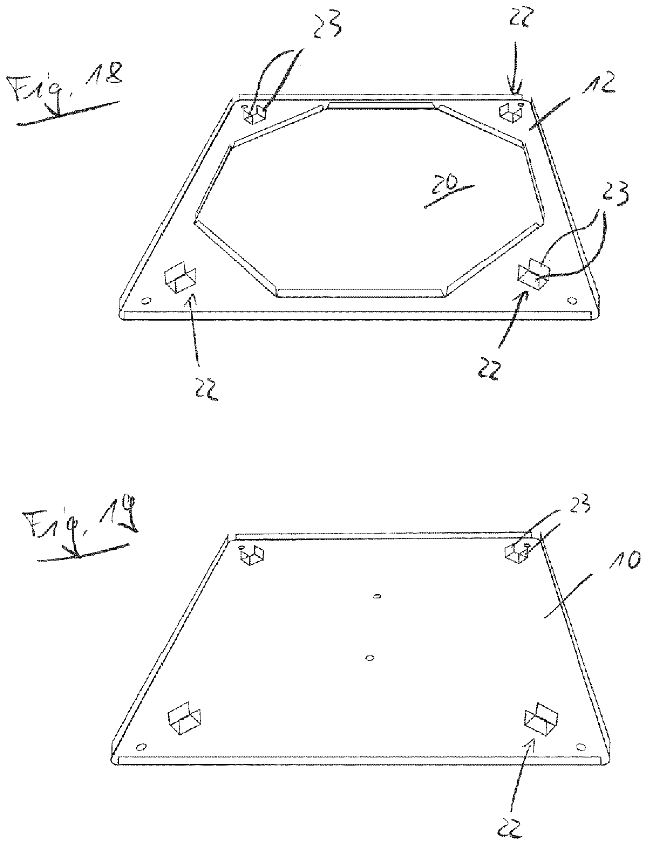

In Figures 15 to 19, a container according to a fifth embodiment is shown.

For the elements known from earlier embodiments, the same reference numerals are used and reference is made to the above comments.

In the fifth embodiment, both the bottom plate 10 and top plate 12 are formed from sheet metal which is thinner than in the previous embodiments. While in the previous embodiments, sheet metal with a thickness of approximately 2 mm was used, the fifth embodiment uses sheet metal with a thickness of approximately 1 mm.

Attachment elements 22 are here formed from portions of the sheet metal which are cut and bent upwardly or downwardly so that two parallel wings 23 are created which are adapted to engage into the interior of posts 14.

The outer edge of plates 10, 12 can be bent so as to avoid sharp edges, and the inner circumference of central opening 20 of top plate 12 can also be bent.

Central opening 20 is here formed with an octagonal shape.

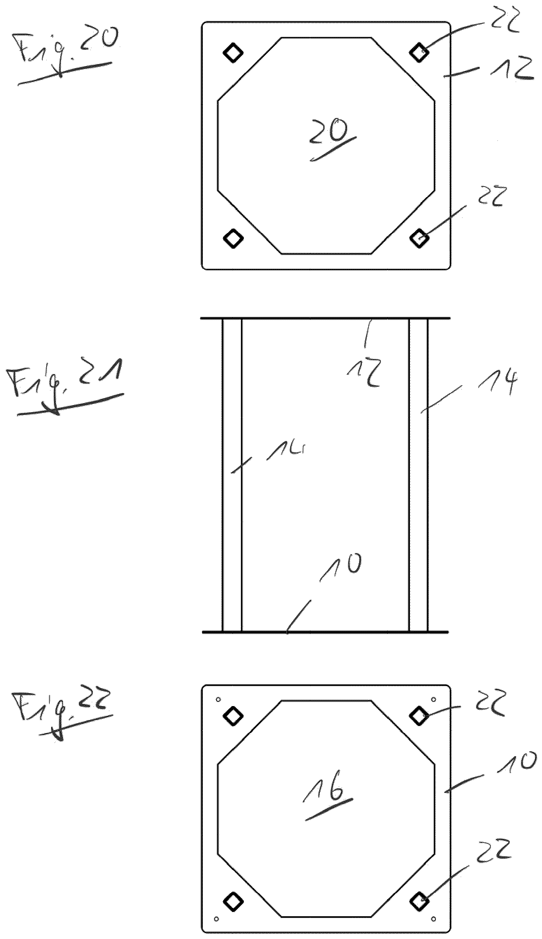

A container according to a sixth embodiment is shown in Figures 20 to 22. The difference over the fifth embodiment is that in the sixth embodiment, bottom plate 10 is also provided with a central opening which has the same octagonal shape as central opening 20 of top plate 12.

In all embodiments, posts 14 can easily be separated from bottom plate 10 and top plate 12. In some embodiments, posts 22 can simply be pulled from attachment elements 22 while in other embodiments, attachment screws 26, 27 have to be removed. In any case, the frame of container 1 can be disassembled very quickly so that its components can be stored in a space saving manner and recycled.

## Claims

1. A wire container having a bottom plate, a top plate, and a plurality of vertically extending posts, the posts being releasably connected to both the bottom plate and the top plate, the bottom plate, the top plate and the posts being formed from metal.

2. The wire container of claim 1 wherein the posts have a rectangular cross section.

3. The wire container of claim 1 wherein the posts have a circular cross section.

4. The wire container of any of the preceding claims wherein attachment elements are provided for connecting the posts to the bottom plate and the top plate.

5. The wire container of claim 4 wherein the attachment elements are projections which engage into the ends of the posts.

6. The wire container of claim 5 wherein the projections are formed in one piece with the bottom and top plates.

7. The wire container of claim 4 wherein the attachment elements are attachment lugs rigidly connected to an outer surface of the posts.

8. The wire container of claim 6 wherein a weld seam is provided between the attachment elements and the posts.

9. The wire container of claim 4 wherein each of the attachment elements has an opening through which an attachment screw extends, the attachment screw connecting the attachment element to the plate.

10. The wire container of claim 9 wherein the attachment screw connects a spacer block to the bottom plate.

11. The wire container of claim 10 wherein two spacer blocks are provided which extend in parallel to each other along outer edges of the container, and two short intermediate blocks arranged between the outer blocks and each extending from an outer edge of the container towards a center of the container along a fraction of the diameter of the container.

12. The wire container of claim 10 wherein the spacer block is from an electrically insulating material, preferably from wood or plastic.

13. The wire container of any of the preceding claims wherein a lifting strap extends underneath the bottom plate and upwards to a position above the top plate.

14. The wire container of any of the preceding claims wherein the bottom plate and the top plate comprise a plurality of receiving openings into which an end of the posts engages.

15. The wire container of claim 14 wherein the posts have a rectangular cross-section, the receiving openings having a rectangular shape so as to receive the posts in a non-rotatable manner.

16. The wire container of any of the preceding claims wherein a cardboard box is provided which forms an exterior wall of the container.

17. The wire container of claim 16 wherein the shortest distance of the cardboard box from the center of the container, seen in a cross section, is larger than the shortest distance of the inner side of the posts from the center of the container, seen in a cross section.

18. The wire container of any of the preceding claims wherein a plastic bag is provided within the posts and on top of the bottom plate.

19. A wire container having a bottom plate, a top plate, and a plurality of vertically extending posts, the posts being releasably connected to both the bottom plate and the top plate, the bottom plate, the top plate and the posts being formed from metal, each post being provided with an attachment element at each end, the attachment element on one end being connected with a screw to the top plate and the attachment element on the other end being connected to the bottom plate with the screw, the screw associated with the bottom plate connecting a wooden block to the bottom plate, the container having four posts arranged equally spaced from each other so as to define a wire receiving space between them, the wire receiving space having a diameter in the range of 600 mm to 800 mm, the distance between the bottom plate and the top plate being in a range of 800 mm to 1,200 mm, each of the posts engaging with one end in a receiving opening provided in the respective plate.
